# FASCICULE DE BREVET EUROPEEN

(11) **EP 1 044 864 B1**
(45) Date de publication et mention de la délivrance du brevet: **30.06.2004**
(21) Numéro de dépôt: 00401000.5
(22) Date de dépôt: 11.04.2000
(51) Int. Cl.: B62D 25/20, B62D 33/02

(54) **Véhicule comportant un plancher non métallique sous contrainte**
Fahrzeug mit einem nicht-metallischen, vorgespannten Boden
Vehicle with a non-metallic prestressed floor

(30) Priorité: 13.04.1999 FR 9904591
(43) Date de publication de la demande: 18.10.2000
(73) Titulaire: ASCA CARROSSIER CONSTRUCTEUR, F-78680 Epone (FR)
(72) Inventeur: Patriarca, Yannick, 78410 Aubergenville (FR); Deschamp, Roger, 92500 Rueil Malmaison (FR)
(74) Mandataire: Texier, Christian

(56) Documents cités:
- DE-A- 4 432 908
- DE-C- 3 500 551
- GB-A- 719 751
- US-A- 4 188 058

## Description

La présente invention concerne le domaine des planchers de carrosserie de véhicule.

Elle s'applique en particulier aux planchers du type défini dans le document EP-A-0 756 983.

On a décrit dans ce document un plancher de carrosserie de véhicule constitué de panneaux de plancher non métalliques, de préférence en bois, par exemple en hêtre, chaque panneau ayant une longueur correspondant à la largeur de la carrosserie et chaque panneau présentant en sous face une feuillure ouverte sur une tranche longitudinale du panneau ou deux feuillures ouvertes respectivement sur l'une et sur l'autre des deux tranches longitudinales du panneau, dans lequel les panneaux ont une résistance adéquate dans le sens de la longueur et sont assemblés de proche en proche par des plats métalliques disposés dans lesdites feuillures, chaque plat étant commun à deux panneaux et fixé aux panneaux par des vis mises en place depuis le dessus des panneaux, réalisant un plancher autoporteur d'un seul tenant.

Par ailleurs le document EP-A-0 756 983 précité propose de fixer le plancher ainsi obtenu, soit en soudant les plats du plancher aux plats supérieurs de longerons du châssis de véhicule, soit en fixant des brides au plancher par vissage à travers les plats en sorte que les plats supérieurs des longerons soient emprisonnés entre les brides et le plancher.

La présente invention a maintenant pour but de proposer un nouveau plancher de véhicule qui présente une résistance intrinsèque transversale supérieure à celle des planchers antérieurs connus, sans exiger de moyens de production lourds et coûteux.

Ce but est atteint dans le cadre de la présente invention grâce à un véhicule comprenant un châssis comportant deux longerons parallèles, un plancher qui repose sur ceux-ci et des moyens de fixation dudit plancher, caractérisé par le fait qu'il comporte des moyens supports sous-jacents à une zone du plancher intermédiaire aux longerons et dont la surface supérieure est située à un niveau inférieur à la surface supérieure des longerons, selon une côte contrôlée, et par le fait que les moyens de fixation sont adaptés pour fixer le plancher sur ces moyens supports pour conférer une flèche contrôlée au plancher.

D'autres caractéristiques, buts et avantages de la présente invention apparaîtront à la lecture de la description détaillée de deux modes préférés de réalisation qui va suivre et en regard des dessins annexés, donnés à titre d'exemple non limitatif et sur lesquels :
- la figure 1 représente une vue schématique en bout d'une carrosserie de véhicule selon un premier mode de réalisation conforme à la présente invention ;

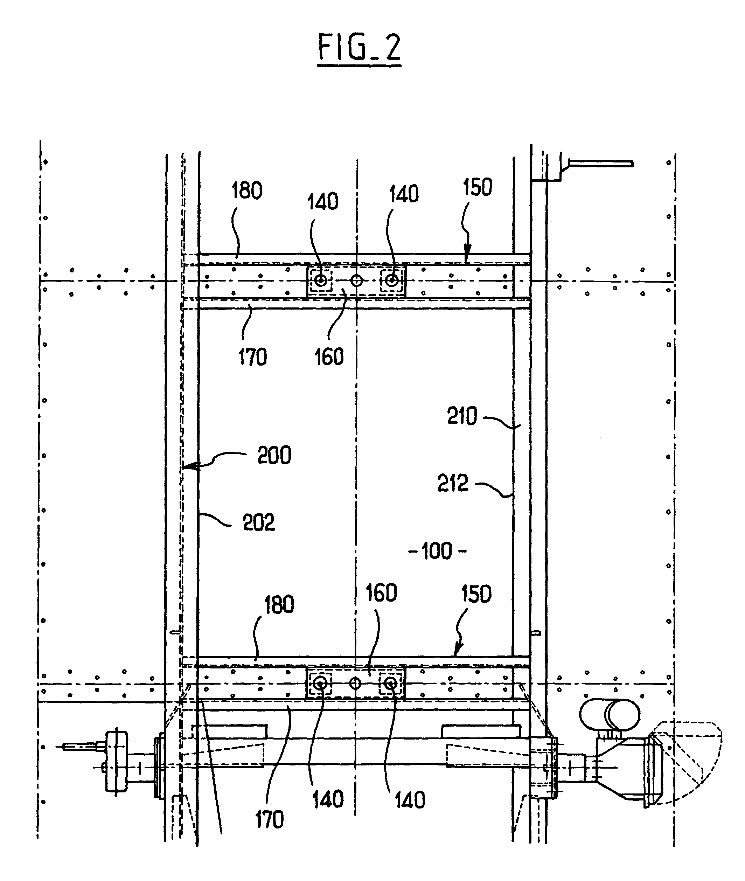

- la figure 2 représente une vue de dessus de cette carrosserie ;
- la figure 3 représente une vue en coupe longitudinale de cette carrosserie ;
- la figure 4 représente une vue schématique en bout similaire à la figure 1, après serrage des moyens de fixation ;
- la figure 5 est une vue en coupe analogue à la figure 1 montrant un deuxième mode de réalisation ;
- la figure 6 est une vue à plus grande échelle du détail A de la figure 5;
- la figure 7 est une vue en coupe selon les plans VII-VII de la carrosserie de la figure 6 ;
- la figure 8 est une vue à plus grande échelle du détail B de la figure 5 ; et
- la figure 9 est une vue en coupe selon les plans IX-IX de la carrosserie de la figure 6.

On aperçoit sur les figures annexées un plancher référencé 100 qui repose sur deux longerons 200, 210 parallèles à la direction longitudinale du véhicule.

Le plancher 100 est formé de préférence par assemblage de panneaux non métalliques dont la longueur correspond à la largeur du véhicule. Il s'agit de préférence de panneaux en bois, par exemple un multiplis de bois dur tel que du hêtre.

Plus précisément comme indiqué précédemment, de préférence le plancher 100 est conforme aux dispositions définies dans le document EP-A-0 756 983. Sur les figures annexées, on a identifié sous la référence 110 les plats disposés dans les feuillures des panneaux de plancher pour assurer la liaison entre ceux-ci. Les plats pourraient être remplacés par des profilés métalliques.

Chaque longeron 200, 210 possède de préférence à son sommet un plat horizontal 202, 212 servant de support latéral au plancher 100. Les surfaces supérieures de ces plats 202, 212 peuvent être coplanaires ou éventuellement inclinées conformément à la flèche imposée aux panneaux du plancher pour supporter ceux-ci. Les longerons 200, 210 peuvent faire l'objet de nombreux modes de réalisation. Il peut s'agir par exemple d'une poutre en I ou en U inversé.

Par ailleurs comme indiqué précédemment selon la présente invention, le véhicule possède en outre des moyens supports 150 sous-jacents à une zone du plancher 100 comprise entre les longerons 200, 210 et dont la surface supérieure 152 est située à un niveau inférieur, selon une côte H contrôlée, à la surface supérieure des plats 202, 212 des longerons 200, 210.

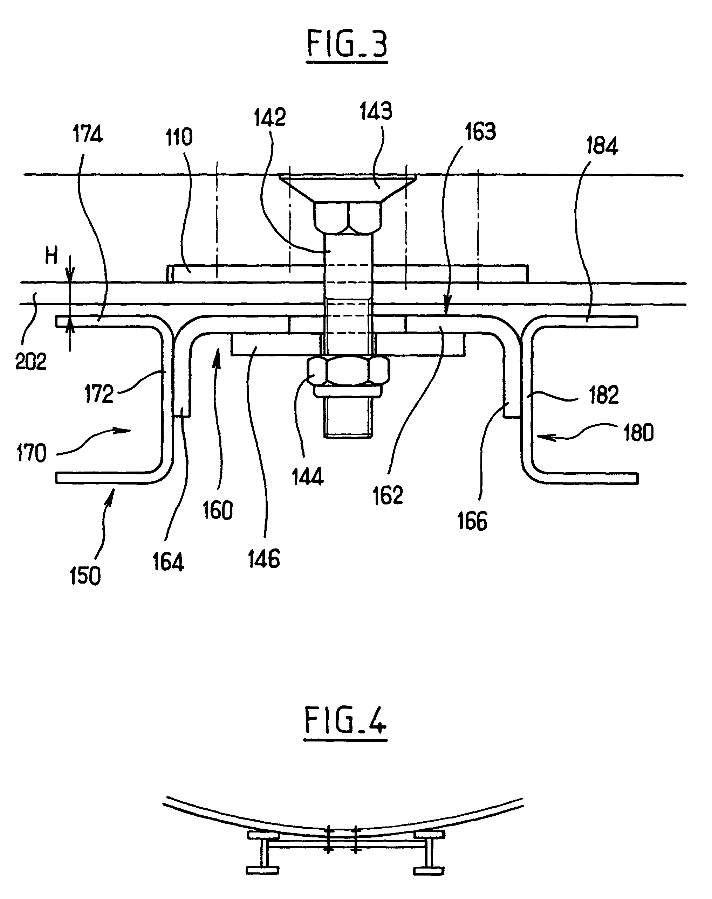

Et il est prévu des moyens de fixation 140 adaptés pour fixer le plancher 100 sur ces moyens supports 150 pour conférer une flèche contrôlée au plancher 100 comme on le voit sur la figure 4.

Les moyens supports 150 peuvent faire l'objet de différents modes de réalisation. Ils doivent présenter une résistance au fléchissement largement supérieure à celle du plancher 100.

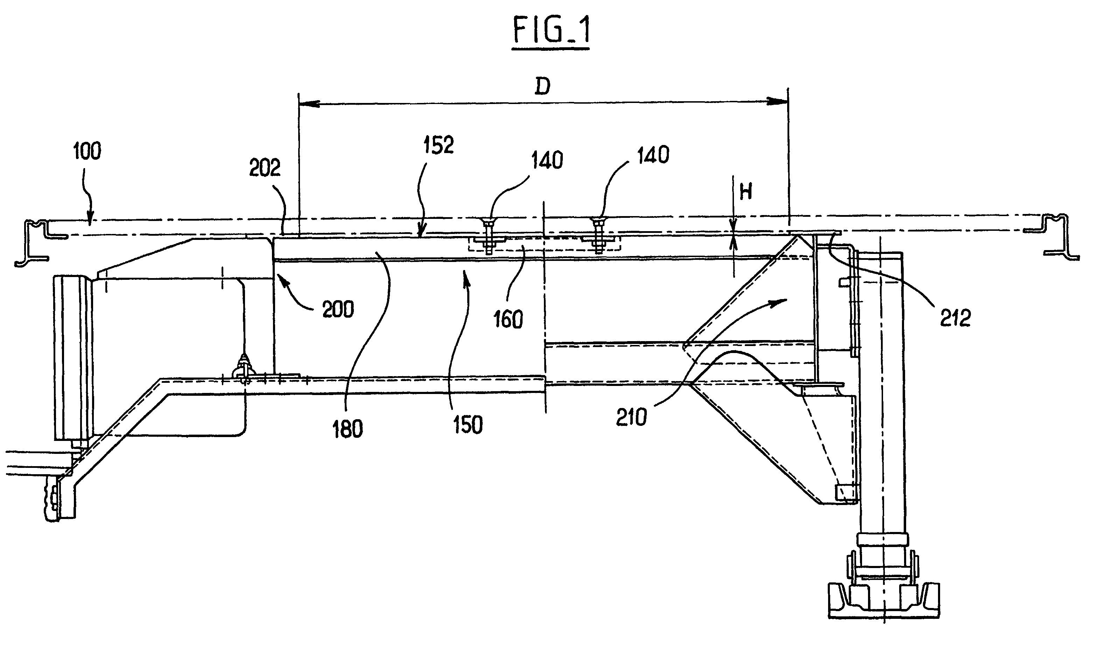

De préférence les moyens supports 150 sont constitués de traverses de bridage rectilignes rigides qui prennent appui elles-mêmes sous les plats supérieurs 202, 212 des longerons 200, 210, ou dont les extrémités sont fixées selon une côte verticale contrôlée sur les longerons 200, 210, par exemple par soudure, comme on le voit sur la figure 1. Ces traverses 150 s'étendent ainsi perpendiculairement à la direction longitudinale du véhicule.

Plus précisément encore selon le mode de réalisation préférentiel de l'invention, illustré sur les figures annexées, chaque traverse 150 est formée par assemblage de trois poutrelles en U : une poutrelle centrale 160 à concavité dirigée vers le bas dont les ailes latérales 164, 166 sont fixées rigidement, de préférence par soudure, respectivement sur la surface extérieure de l'âme 172, 182 de deux poutrelles latérales 170, 180 ayant leur concavité dirigée à l'opposée de la poutrelle centrale 160, soit respectivement vers l'avant et vers l'arrière du véhicule, et ce dans une position telle que la surface extérieure 163 de l'âme 162 de la poutrelle centrale 160 et les surfaces extérieures des ailes supérieures 174, 184 des poutrelles latérales 170, 180 soient coplanaires et définissent un plan horizontal situé à un niveau inférieur à la surface supérieure des plats 202, 212 des longerons 200, 210.

Selon le mode de réalisation préférentiel illustré sur les figures annexées, la poutrelle centrale 160 est limitée en longueur à la zone centrale des traverses 150, par exemple sur une longueur typique de l'ordre de 40cm, tandis que les poutrelles latérales 170 et 180 s'étendent sur toute la longueur des traverses de bridage et prennent position sous le plat 202, 212 des longerons 200, 210 ou sont fixées, par exemple par soudure, sur les longerons 200, 210.

Lorsque les traverses 150 prennent appui sous les plats 202, 212 des longerons 200, 210, le décalage en hauteur existant entre la surface des traverses 150 et celle des longerons 200, 210 est égal à l'épaisseur de ces plats 202, 212. Ce décalage peut être supérieur si les traverses 150 sont fixées dans une position plus basse contrôlée sur les longerons 200, 210.

A titre d'exemple non limitatif, pour des panneaux de plancher 100 ayant une longueur de l'ordre de 2,50 m et une largeur de l'ordre de 1,50m, la distance D séparant les longerons 200, 210 est typiquement de l'ordre de 1,20m, tandis que la différence de hauteur H entre la surface des longerons 200, 210 et la surface des traverses de bridage est typiquement comprise entre 5 et 20mm, préférentiellement entre 7 et 15mm et très avantageusement de l'ordre de 8 à 10mm, soit un rapport H/D compris entre 5/1200 et 20/1200, préférentiellement entre 7/1200 et 15/1200, et très avantageusement de l'ordre de 8/1200 à 10/1200.

De préférence il est prévu une traverse de bridage 150 sous chaque zone de liaison entre deux panneaux jointifs du plancher, soit sous chaque plat métallique disposé dans une feuillure de ces panneaux selon le concept de réalisation défini dans le document EP-A-0 756 983.

Les moyens de fixation 140 peuvent également faire l'objet de différents modes de réalisation. De préférence ils sont composés de boulons 142 engagés par le haut dans le plancher et traversant les plats 110 et les traverses de bridage 150 (plus précisément l'âme centrale 162 des poutrelles centrales 160) pour être serrés à l'aide d'écrous complémentaires 144 sous-jacents aux traverses 150 avec rondelle 146 interposée. La tête évasée 143 des boulons pénètrent bien entendu de préférence dans les panneaux de plancher pour affleurer la surface supérieure de ceux-ci.

Il est prévu ainsi de préférence deux boulons 142 symétriques par rapport à un plan médian longitudinal du véhicule, pour chaque traverse de bridage 150.

L'homme de l'art comprendra qu'il suffit de contrôler la côte H entre la surface supérieure des longerons 200, 210 et la surface supérieure des traverses de bridage 150 pour contrôler la pré-flèche imposée aux panneaux de plancher 100. De préférence le serrage des boulons 142 est opéré jusqu'à ce que le centre des panneaux 100 repose sur les traverses de bridage 150, ce qui correspond à la flèche maximale, et pénétration des têtes 143 dans les panneaux de plancher.

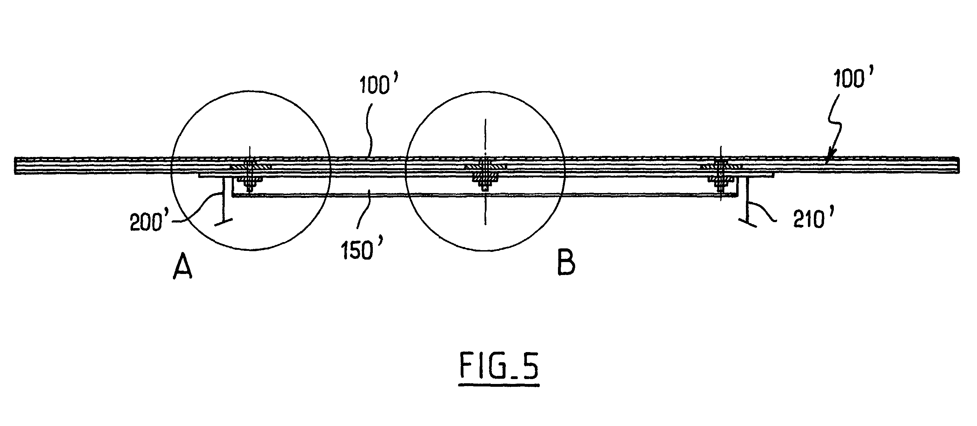

Dans le deuxième mode de réalisation des figures 5 à 9, les panneaux de planchers sont reliés par des profilés métalliques 110'. Chaque profilé comporte un corps central de profil rectangulaire et deux ailes horizontales inférieures 113' s'insérant dans les feuillures des panneaux. Les ailes sont reliées aux panneaux par des vis verticales 112'. Les panneaux reposent à nouveau sur les plats 202', 212' au sommet des longerons.

Les moyens supports 150' s'étendent verticalement au droit des profilés 110'. Ils sont ici constitués sous chaque profilé 110' par une unique traverse à profil en « Ω », dont les ailes horizontales s'étendent en partie basse.

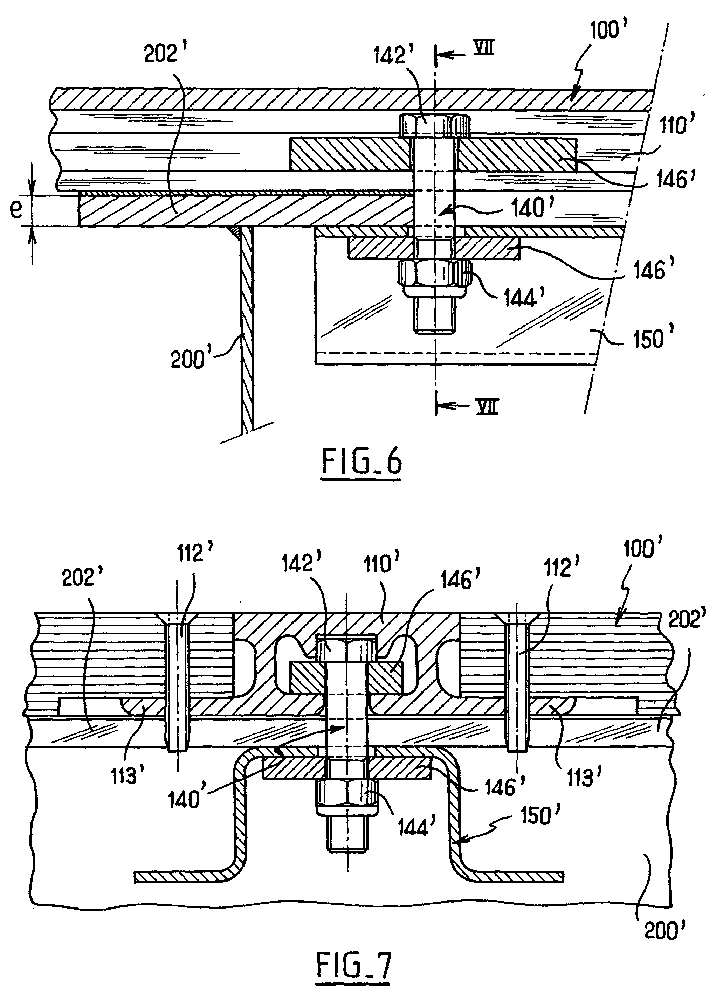

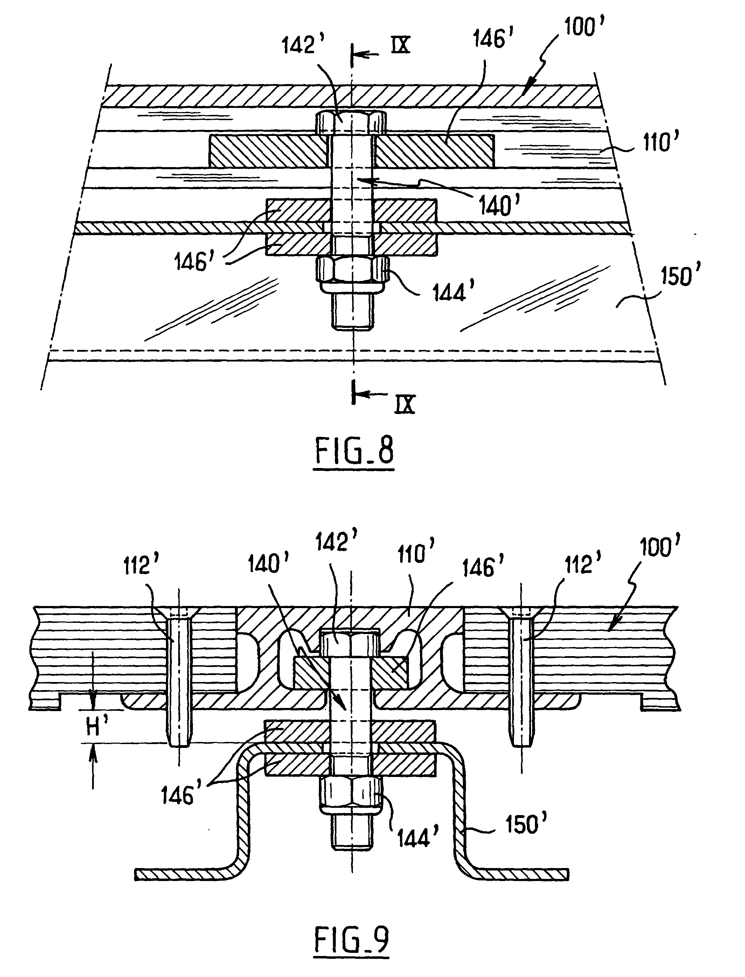

Chaque traverse 150' est boulonnée en trois points au profilé 110' respectif. L'un des points, illustré en figure 9, constitue un boulonnage central. Les deux autres se trouvent contigus aux longerons, l'un d'eux étant illustré à la figure 6. Ces boulonnages 140' mettent en oeuvre en chaque point une vis 142' dont la tête est engagée dans le profilé 110' et un écrou 144' introduit dans la traverse 150' par le dessous. Les appuis sont réalisés par l'intermédiaire de rondelles 146'.

En référence aux figures 6, 7, près des longerons, les extrémités de chaque traverse 150' s'étendent sous le plat 202', 212' afin de prendre celui-ci en sandwich entre le profilé 110' par-dessus et la traverse 150' par-dessous. Le serrage s'effectue au moyen des boulons 140'. Le serrage est limité par l'épaisseur des plats 202', 212' au voisinage de ceux-ci. La distance entre le profilé 110' et la traverse 150' est égale à cette épaisseur e.

En référence aux figures 8, 9, au centre de la traverse 150', on donne une flèche au plancher en rapprochant davantage la traverse 150' du profilé 110'. La distance H' qui les sépare est légèrement inférieure à e, bien que cela ne soit pas visible sur les figures.

Selon cet agencement, les traverses de bridages 150' sont amovibles puisqu'elles ne sont fixées au châssis que par les boulons 140'.

Bien entendu, la présente invention n'est pas limitée aux modes de réalisation particuliers qui viennent d'être décrits, mais s'étend à toutes variantes selon les revendications 1 à 12.

La présente invention s'applique notamment aux carrosseries de fourgons et autres véhicules utilitaires.

## Revendications

1. Véhicule comprenant un châssis, comportant deux longerons parallèles (200, 210 ; 200', 210'), un plancher (100 ; 100') qui repose sur ceux-ci et des moyens (140 ; 140') de fixation dudit plancher, **caractérisé par le fait qu'**il comporte des moyens supports (150 ; 150') sous-jacents à une zone du plancher intermédiaire aux longerons et dont la surface supérieure est située à un niveau inférieur à la surface supérieure des longerons, selon une côte contrôlée, et **par le fait que** les moyens de fixation (140 ; 140') sont adaptés pour fixer le plancher sur ces moyens supports (150; 150') pour conférer une flèche contrôlée au plancher.

2. Véhicule selon la revendication 1, **caractérisé par le fait que** le plancher (100 ; 100') est formé par assemblage de panneaux non métalliques dont la longueur correspond à la largeur du véhicule, par exemple un multiplis de bois dur tel que du hêtre.

3. Véhicule selon l'une des revendications 1 ou 2, **caractérisé par le fait que** le plancher est constitué par assemblage de panneaux, chaque panneau présentant en sous face une feuillure ouverte sur une tranche longitudinale du panneau ou deux feuillures ouvertes respectivement sur l'une et sur l'autre des deux tranches longitudinales du panneau, dans lequel les panneaux ont une résistance adéquate dans le sens de la longueur et sont assemblés de proche en proche par des plats ou des profilés métalliques (110') disposés dans lesdites feuillures, chaque plat ou profilé étant commun à deux panneaux et fixé aux panneaux par des vis (112') mises en place depuis le dessus des panneaux, réalisant un plancher autoporteur d'un seul tenant.

4. Véhicule selon l'une des revendications 1 à 3, **caractérisé par le fait que** les moyens supports (150 ; 150') présentent une résistance au fléchissement supérieure à celle du plancher (100 ; 100').

5. Véhicule selon l'une des revendications 1 à 4, **caractérisé par le fait que** les moyens supports (150; 150') sont constitués de traverses de bridage rectilignes rigides qui prennent appui elles-mêmes sous des plats supérieurs des longerons ou sont fixées avec une côte verticale contrôlée sur ces longerons.

6. Véhicule selon l'une des revendications 1 à 5, **caractérisé par le fait que** chaque traverse (150) est formée par au moins une poutrelle (160, 170, 180).

7. Véhicule selon l'une des revendications 1 à 6, **caractérisé par le fait que** chaque traverse (150) est formée par assemblage de trois poutrelles en U : une poutrelle centrale (160) à concavité dirigée vers le bas dont les ailes latérales (164, 166) sont fixées rigidement, de préférence par soudure, respectivement sur la surface extérieure de l'âme (172, 182) de deux poutrelles latérales (170, 180) ayant leur concavité dirigée à l'opposée de la poutrelle centrale (160), soit respectivement vers l'avant et vers l'arrière du véhicule, et ce dans une position telle que la surface extérieure (163) de l'âme (162) de la poutrelle centrale (160) et les surfaces extérieures des ailes supérieures (174, 184) des poutrelles latérales (170, 180) soient coplanaires et définissent un plan horizontal situé à un niveau inférieur à la surface supérieure de plats (202, 212) des longerons (200, 210).

8. Véhicule selon l'une des revendications 1 à 7, **caractérisé par le fait que** la distance D séparant les longerons (200, 210 ; 200', 210') est de l'ordre de 1,20m, tandis que la différence de hauteur H entre la surface des longerons et la surface des moyens supports (150 ; 150') est comprise entre 5 et 20mm, préférentiellement entre 7 et 15mm, et très avantageusement de l'ordre de 8 à 10mm, soit un rapport H/D compris entre 5/1200 et 20/1200, préférentiellement entre 7/1200 et 15/1200 et très avantageusement de l'ordre de 8/1200 à 10/1200.

9. Véhicule selon l'une des revendications 1 à 8, **caractérisé par le fait qu'**il comprend une traverse de bridage (150, 150') sous chaque zone de liaison entre deux panneaux jointifs du plancher.

10. Véhicule selon l'une des revendications 1 à 9, **caractérisé par le fait que** les moyens de fixation (140) sont composés de boulons (142) engagés par le haut dans le plancher et traversant les traverses de bridage (150) pour être serrés à l'aide d'écrous complémentaires ( 144) sous-jacents aux traverses.

11. Véhicule selon l'une des revendications 1 à 10, **caractérisé par le fait qu'**il est prévu deux boulons de fixation (142) symétriques par rapport à un plan médian longitudinal du véhicule, pour chaque traverse de bridage (150).

12. Véhicule selon l'une des revendications 1 à 11, **caractérisé par le fait que** chaque traverse de bridage (150') est amovible.

## Patentansprüche

1. Fahrzeug, das ein Chassis umfaßt, das zwei parallel Längsträger (200, 210; 200', 210'), einen Boden (100; 100'), der auf diesen sitzt, und Befestigungsmittel (140; 140') für den Boden umfaßt, **dadurch gekennzeichnet, daß** es Abstützungsmittel (150; 150') umfaßt, die unter einem zwischen den Längsträgern liegenden Bereich des Bodens liegen und deren Oberseite, gemäß einem einstellbaren Maß, auf einer Höhe unterhalb der Oberseite der Längsträger angeordnet ist und dadurch daß die Befestigungsmittel (140; 140') dazu geeignet sind, den Boden auf den Abstützungsmittel (150; 150') zu befestigen, um dem Boden eine einstellbare Durchbiegung zu geben.

2. Fahrzeug nach Anspruch 1, **dadurch gekennzeichnet, daß** der Boden (100; 100') durch den Zusammenbau von nichtmetallischen Platten gebildet wird, deren Länge der Breite des Fahrzeugs entspricht, beispielsweise ein Mehrschichtsperrholz aus Harthotz, wie etwa Buchenholz.

3. Fahrzeug nach einem der Ansprüche 1 oder 2, **dadurch gekennzeichnet**, däß der Boden durch den Zusammenbau von Platten gebildet wird, wobei jede Platte auf der Unterseite an einer Längskante der Platte eine offene Falz oder zwei offene Falzen auf der einen beziehungsweise der anderen der beiden Längskanten der Platte aufweist, wobei die Platten in Längsrichtung eine geeignete Festigkeit haben und schrittweise durch in diesen Falzen angeordnete flache oder profilierte metallische Elemente (110') zusammengefügt werden, wobei jedes flache oder profilierte Element zu zwei Platten gehört und an den Platten durch Schrauben (112') befestigt wird, die von der Oberseite der Platten angebracht werden, wodurch ein durchgehender selbsttragender Boden realisiert wird.

4. Fahrzeug nach einem der Ansprüche 1 bis 3, **dadurch gekennzeichnet, daß** die Abstützungsmittel (150; 150') eine größere Biegefestigkeit als der Boden (100; 100') aufweisen.

5. Fahrzeug nach einem der Ansprüche 1 bis 4, **dadurch gekennzeichnet, daß** die Abstützungsmittel (150; 150') durch gerade, steife Flanschquerträger gebildet werden, die selbst unter oberen Flachelementen der Längsträger abgestützt oder mit einem einstellbaren senkrechten Maß auf diesen Längsträgern befestigt sind.

6. Fahrzeug nach einem der Ansprüche 1 bis 5, **dadurch gekennzeichnet, daß** jeder Querträger (150) durch wenigstens ein Trägerelement (160, 170, 180) gebildet wird.

7. Fahrzeug nach einem der Ansprüche 1 bis 6, **dadurch gekennzeichnet, daß** jeder Querträger (150) durch den Zusammenbau von drei U-förmigen Trägerelementen gebildet wird: ein zentrales Trägerelement (160) mit einer nach unten gerichteten Konkavität, dessen seitliche Teile (164, 166) bevorzugt durch Schweißen starr auf den jeweiligen Außenflächen der Stege (172, 182) der beiden seitlichen Trägerelemente (170, 180) befestigt sind, wobei deren Konkavität vom zentralen Trägerelement (160) weggerichtet ist, also zum vorderen beziehungsweise hinteren Teil des Fahrzeugs, und dies in einer solchen Position, daß die äußere Fläche (163) des Stegs (162) des zentralen Trägerelements (160) und die äußeren Flächen der oberen Teile (174, 184) der seitlichen Trägerelemente (170, 180) koplanar sind und eine horizontale Fläche bilden, die auf einer Höhe unterhalb der Oberseite der Flachelemente (202, 212) der Längsträger (200, 210) liegt.

8. Fahrzeug nach einem der Ansprüche 1 bis 7, **dadurch gekennzeichnet, daß** der die Längsträger (200, 210; 200', 210') trennende Abstand D in der Größenordnung von 1,20m ist, während der Unterschied in der Höhe H zwischen der Fläche der Längsträger und der Fläche der Abstützungsmittel (150; 150') zwischen 5 und 20mm liegt, vorzugsweise zwischen 7 und 15mm und besonders vorteilhafterweise in der Größenordnung von 8 bis 10mm, was ein Verhältnis H/D zwischen 5/1200 und 20/1200, vorzugsweise zwischen 7/1200 und 15/1200 und besonders vorteilhafterweise in der Größenordnung von 8/1200 bis 10/1200 ergibt.

9. Fahrzeug nach einem der Ansprüche 1 bis 8, **dadurch gekennzeichnet, daß** es unter jeder Verbindungszone zwischen zwei nebeneinanderliegenden Platten des Bodens einen Flanschquerträger (150; 150') aufweist.

10. Fahrzeug nach einem der Ansprüche 1 bis 9, **dadurch gekennzeichnet, daß** die Befestigungsmittel (140) durch Schraubenbolzen (142) gebildet werden, die von oben in den Boden eingeführt werden und durch die Flanschquerträger (150) verlaufen, um mit Hilfe von unterhalb der Querträger liegenden passenden Muttern (144) festgezogen zu werden.

11. Fahrzeug nach einem der Ansprüche 1 bis 10, **dadurch gekennzeichnet, daß** für jeden Flanschquerträger (150) symmetrisch zu einer mittlere Längsebene des Fahrzeugs zwei Befestigungsschraubenbolzen (142) vorgesehen sind.

12. Fahrzeug nach einem der Ansprüche 1 bis 11, **dadurch gekennzeichnet, daß** jeder Flanschquerträger (150') herausnehmbar ist.

## Claims

1. A vehicle comprising a chassis having two parallel side members (200, 210; 200', 210'), a floor (100; 100') which rests thereon, and fixing means (140; 140') for fixing said floor, the vehicle being **characterized by** the fact that it includes support means (150; 150') underlying a zone of the floor between the side members and with the top surface thereof situated at a level that is lower than the top surface of the side members by a controlled distance, and by the fact that the fixing means (140; 140') are adapted to fix the floor on the support means (150; 150') to impart controlled sag to the floor.

2. A vehicle according to claim 1, **characterized by** the fact that the floor (100; 100') is made by assembling together non-metallic plates of length corresponding to the width of the vehicle, for example plywood made of a hardwood such as beech.

3. A vehicle according to claim 1 or claim 2, **characterized by** the fact that the floor is constituted by an assembly of panels, each panel presenting in its under face a rabbet that is open over a longitudinal edge face of the panel or two rabbets that are open respectively on both of two longitudinal side faces of the panels, in which the panels are of suitable strength in the long direction and are assembled together one after another by metal strips or flats (110') disposed in said rabbets, each strip or flat being common to two panels and being fixed to the panels by screws (112') put into place from above the panels, thereby providing a self supporting one-piece floor.

4. A vehicle according to any one of claims 1 to 3, **characterized by** the fact that the support means (150; 150') present bending strength that is greater than that of the floor (100; 100').

5. A vehicle according to any one of claims 1 to 4, **characterized by** the fact that the support means (150; 150') are constituted by rigid rectilinear bracing cross-members which themselves bear beneath the top flats of the side members or are fixed with control vertical distance to said side members.

6. A vehicle according to any one of claims 1 to 5, **characterized by** the fact that each cross-member (150) is formed by at least one joist (160, 170, 180).

7. A vehicle according to any one of claims 1 to 6, **characterized by** the fact that each cross-member (150) is formed by assembling together three channel-section joists: a central joist (160) having its concave side facing downwards with its side flanges (164, 166) being rigidly fixed, preferably by welding, respectively to the outside surface of the web (172, 182) of each of two lateral joists (170, 180) whose concave sides face away from the central joist (160), i.e. respectively towards the front and the rear of the vehicle, with this being in a position such that the outside surface (163) of the web (162) of the central joist (160) and the outside surfaces of the top flanges (174, 184) of the lateral joists (170, 180) are coplanar and define a horizontal plane situated at a level below the top surface of the flats (202, 212) of the side members (200, 210).

8. A vehicle according to any one of claims 1 to 7, **characterized by** the fact that the distance D between the side members (200, 210; 200', 210') at about 1.20 m, whereas the difference in height H between the surface of the side members and the surface of the support means (150; 150') lies in the range 5 mm to 20 mm, and preferably in the range 7 mm to 15 mm, and most advantageously is about 8 mm to 10 mm, giving a ratio H/D that lies in the range 5/1200 to 20/1200, preferably in the range 7/1200 to 15/1200, and most advantageously about 8/1200 to 10/1200.

9. A vehicle according to any one of claims 1 to 8, **characterized by** the fact that it includes a bracing cross-member (150, 150') beneath each region in which two touching panels of the floor are connected together.

10. A vehicle according to any one of claims 1 to 9, **characterized by** the fact that the fixing means (140) are constituted by bolts (142) engaged downwards into the floor and passing through the bracing cross-members (150) to be tightened by means of complementary nuts (144) underlying the cross-members.

11. A vehicle according to any one of claims 1 to 10, **characterized by** the fact that two fixing bolts (142) are provided symmetrically about a longitudinal midplane of the vehicle for each bracing cross-member (150).

12. A vehicle according to any one of claims 1 to 11, **characterized by** the fact that each bracing cross-member (150') is removable.
